# EUROPÄISCHE PATENTSCHRIFT

(11) **EP 1 238 796 B1**
(45) Veröffentlichungstag und Bekanntmachung des Hinweises auf die Patenterteilung: **22.09.2004**
(21) Anmeldenummer: 01127115.2
(22) Anmeldetag: 15.11.2001
(51) Int. Cl.: B32B 27/32, C08L 23/10, C08L 53/00

(54) **Mehrschichtige Tiefziehfolie**
Multilayered deep-drawn film
Feuille multicouche emboutie

(30) Priorität: 10.03.2001 DE 20104189 U
(43) Veröffentlichungstag der Anmeldung: 11.09.2002
(73) Patentinhaber: FOLIEtec Kunststoffwerk AG, 06571 Rossleben (DE)
(72) Erfinder: Eck, Rolf, 06571 Wiehe (DE)
(74) Vertreter: Haussingen, Peter

(56) Entgegenhaltungen:
- EP-A- 0 457 082
- EP-A- 0 635 360
- DE-A- 4 202 663
- DATABASE WPI Section Ch, Week 198611 Derwent Publications Ltd., London, GB; Class A17, AN 1986-072714 XP002204843 & JP 61 022942 A (NISSAN MOTOR CO LTD), 31. Januar 1986 (1986-01-31)

## Beschreibung

Die Erfindung bezeichnet eine Folie auf Basis von Polypropylen, die mittels Coextrusions-Blasverfahren hergestellt wurde, zum Tiefziehen.

Mittels Extrusions- oder Coextrusions- Blasverfahren oder auch Chill-Roll-Verfahren können Tiefziehfolien als Monooder Verbundfolien aus verschiedenen Polymeren, insbesondere Polyamiden, Polyolefinen oder auf Olefinen basierenden Copolymeren hergestellt werden.
Für bestimmte Einsatzgebiete werden aus mehreren Lagen unterschiedlicher Folien mit spezifischen Eigenschaften und verschiedenen Materialien, die beispielsweise durch Kaschieren miteinander verbunden wurden, wobei spezielle technologische Verfahren, insbesondere mit hohem Energiebedarf einzusetzen sind, verwendet. Verbundfolien neigen beim Tiefziehen zum Aufspleißen, haben geringe Reißfestigkeiten der Mulden und besonders bei Polyethylenoberflächen ohne zusätzliche Beschichtung kommt es zum Kleben.
In einem späteren Recyclingprozess erweisen sich Verbundfolien stets als problematisch, wobei zumindest ein erhöhter Aufwand zum Trennen der verschiedenen Materialien erforderlich ist.
Polypropylen wird derzeit je nach Typ vorzugsweise zum Spritzgießen von dünnwandigen Behältern in der Lebensmittelindustrie, zur Herstellung steifer Folien für Etiketten, für sehr dünnwandige flexibler Verpackungen wie Standbeutel, als Toast-Verpackung oder Tiefkühlverpackungen oder für im Spritzstreckblas-Verfahren hergestellte Behälter eingesetzt. Die Steifigkeit, Härte, Flexibilität und Zähigkeit von Polypropylen lassen sich zwar mittlerweile in gewissen Grenzen während der Polymerisation steuern, jedoch sind bisher keine für das Tiefziehen besonders geeignete Typen bekannt.

Aus dem Stand der Technik sind verschiedene Zusammensetzungen von Polymerblends bekannt, um bestimmte Folienqualitäten zu erzielen.
Die Druckschrift DE 195 46 457 C2 offenbart eine polymere Zusammensetzung für eine coextrudierte Folie, wobei als Komponente A für die Trägerschicht Polypropylen und ein anorganischer Füllstoff wie Talkum, Glimmer mit bestimmter Teilchengröße und als Komponente B für die Deckschicht Polypropylen und/oder Polyethylen, ein Metallsulfid oder ein Gemisch aus einem Metallsulfid und einem Erdalkalisulfat zum Einsatz kommen, die Komponenten A und B können gegebenenfalls weitere Zusätze aufweisen. Die so erzeugte Folie weist nur geringe Dehnwerte auf und ist zum Tiefziehen ungeeignet.
In der Druckschrift DE 44 41 848 A1 wird eine sterilisationsfähige, tiefziehbare, klebstofffreie und siegelbare Verbundfolie offenbart, deren der Siegelseite gegenüberliegende Außenschicht Polypropylen oder dessen Copolymerisate oder eine Mischung von zwei unterschiedlichen LLDPE-Typen oder eine Mischung von LLDPE mit LDPE enthält. Die Folie kann aus mindestens zwei Schichten aufgebaut sein, wird jedoch bevorzugt drei- und mehrschichtig aus verschiedenen Kunststoffen ausgeführt. Zur Vermeidung von Spleißneigungen, Rollneigungen und der besseren Haftung sind spezielle Zwischenschichten erforderlich. Die Herstellung dieser Folie ist aufwändig, eine Spleißneigung ist nicht völlig auszuschließen und das Recyceln der Folie ist wegen der zu unterschiedlichen Kunststoffe problematisch.
Das Dokument DE 195 15 969 A1 beschreibt eine hochtransparente Tiefziehfolie mit einer Siegelschicht auf Basis von Polypropylen (PP) und Linear Low Density Polyethylen (LLDPE), die sterilisationsfest, eine hohe mechanische Festigkeit aufweist, wobei mindestens eine Schicht polymerblend aus PP und LLDPE besteht, deren PP-Anteil 81-99,8 Gew. % und LLDPE-Anteil 0,2-19 Gew. % beträgt. Die Dichte des eingesetzten LLDPE liegt vorzugsweise im Bereich von 0,925 - 0,940 g/cm³. Die Folie kann sowohl nach dem Coextrusions- als auch nach dem Chill-Roll-Verfahren hergestellt werden. Zwischen den Schichten aus verschiedenen Polymeren sind aber stets Verbindungsschichten aus einem polymeren Haftvermittler erforderlich, wodurch der Herstellungsaufwand erhöht, das Recyceln problematisch wird und eine Spleißneigung beim Tiefziehen nicht ausgeschlossen werden kann.
Des Weiteren wird in der Druckschrift EP 0 164 190 eine in der Herstellung von sterilisierbaren Artikeln oder deren Komponenten einsetzbare, heißsiegelbare, thermoplastische Folie aus einem Blend mit mindestens 20 Gew.% Polypropylen, 10 bis 60 Gew.% Ethylen-Propylen-Elastomer und 10- 60 Gew.% Polyethylen beschrieben. Diese einschichtig aus einem Polymerblend hergestellte Folie weist beim Tiefziehen erhebliche Nachteile auf. Es sind nur geringe Verarbeitungsgeschwindigkeiten möglich, da einschichtige Folien zum Stoppen auf beheizten Werkzeugen neigen.

Die Aufgabe der Erfindung besteht darin, eine im Cöextrusions-Blasverfahren hergestellte, mehrschichtige Folie, die eine Schicht aus einem Blend mit Polypropylen aufweist, hohe Festigkeits- und Dehnwerte besitzt, keine Zwischenschichten oder Haftvermittler benötigt, keine Spleißneigung besitzt sowie einfach und kostengünstig herzustellen ist, als Tiefziehfolie für Verpackungen einzusetzen.

Die Aufgabe wird durch die im Patentanspruch 1 aufgeführten Merkmale gelöst. Bevorzugte Weiterbildungen ergeben sich aus den Unteransprüchen.

Der Gegenstand der Erfindung besteht in der Verwendung einer mittels Coextrusions-Blasverfahren in bekannter Weise

**D1**, EP0635360, definiert eine tiefziehbare Mehrschichtfolie mit einem oberen Film A enthaltend vernetztes PP-EPDM (Dichte: 0,83-0,96),
heterophasiges PP -Blockcopolymer und lonomer,
der untere Film B enthält mehrere Polyolefine.
Der Film (A) enthält (a) 20-80% crosslinked (PP)/EPDM (Alloy oder Blend: homound/oder co-PP und teilweise oder voll- vernetztes EPDM),
(b) 80-20% unvernetztes oder heterophasisches PP-Block-CP enthaltend 35-75 Gew.-% E-PP (EP) Komponente, von der 15-1% ersetzt sind durch (c) reaktive Gruppen enthaltende Polymere und/oder lonomer(e) basierend auf Ethylen und (Meth)Acrylsäure Gruppen (teilweise neutralisiert durch Metallionen).

**D2**, DE4202663, definiert einen Einschichtfilm basierend auf einem PP-Terpolymer Blend: VLDPE u./o. heterophasigem PO oder PP-HC oder -CP enthaltendem Elastomer mit guter Flexibilität und Siegeleigenschaften:
PP-Terpolymer bestehend aus Ethylen und Butylen und größer gleich 75 mol-% PP, Prozeßhifsmittel und Additive.
Das Blend enthält: (A) Propylen-Terpolymer mit 1-12 % Ethylen, 0.3-10% Butylen und max. 12% Ethylen + Butylen und (B) VLDPE (d < 0.91), (C-1) heterophasige(s) Polyolefin(e) enth. 30-80% Elastomer oder (C-2) Polyolefin(e), enthaltend ein Polypropylen Homo- oder Propylen-Ethylen Copolymer. hergestellten, in der bevorzugten Ausführung, in 3 Schichten coextrudierten Folie, als Tiefziehfolie.
Die beim Tiefziehen untere Schicht der Folie besteht aus einem Polypropylen (PP) mit hohem Molekulargewicht, welches ein heterophasisches Polypropylen Copolymer ist mit einer Dichte von 0,9 g/cm³ nach Methode ISO 1183, die mittlere Schicht aus einem Blend des gleichen Polypropylen mit thermoplastischem Polyolefin mit einer Dichte von 0,89-0,924 g/cm³, mit Metallionen vernetztem linearen Polyethylen niedriger Dichte (mLLDPE 0,918-0,921 g/cm³) sowie Polyethylen mittlerer Dichte (MDPE; 0,936-0,939 g/cm³) und die obere Schicht aus einem Siegelmedium, das je nach zu verwendendem Siegelmaterial beispielsweise aus Acrylsäure/Acrylat-Copolymer (E/A), LLDPE niedriger Dichte und Vicaterweichungspunkt sowie low density Polyethylen (LDPE), Ethylen-Vinylacetat (EVA) - Copolymere mit und ohne Peeleinstellung, gebildet wird.

Die Blends für die mittlere Schicht bestehen aus 45 - 75 % Polypropylen, 5 - 30 % mLLDPE sowie 5 - 30 % MDPE.

Die Masseanteile der einzelnen Bestandteile des Blends bestimmen die Eigenschaften der geblasenen Folie.

Die Flächenmasse der Folie lässt sich zudem über das Mischungsverhältnis der einzelnen Komponenten des Blends beeinflussen.

Weiterhin ist vorgesehen, den Ausgangsmaterialien für die Schichten aus bzw. auf Basis von Polypropylen in Abhängigkeit von gewünschten Eigenschaften, insbesondere beim Einsatz der Tiefziehfolie für zu sterilisierende Verpackungen, Antioxidantien und UV-Stabilisatoren oder UV-Absorber sowie deren Kombination miteinander als Additiv zuzusetzen.

Der äußeren Schicht aus Polypropylen können weiterhin noch Gleit- und Antiblockmittel zugesetzt werden.

Die Vorteile der Erfindung bestehen insbesondere im ausgezeichneten Tiefziehverhalten mit vorteilhaften Eigenschaften im tiefgezogenen Bereich, mit hoher Durchstoßfestigkeit, mit besseren Festigkeits- und Elastizitätswerten als bei bisher bekannten Mono- oder Verbundfolien aus anderen Ausgangsmaterialien oder den bekannten Blends aus Polymeren.
Es ist eine hohe Temperaturbeständigkeit der Folie gegeben, die eine Sterilisierung mittels Dampf, Begasung als oder auch γ-Strahlen ermöglicht.
Bei Verwendung für Tiefkühlprodukte oder Fertiggerichte ist die Kochfestigkeit gewährleistet.
Beim Tiefziehen ist keine Lochbildung oder das Auftreten von Spleißerscheinungen zu verzeichnen, da die Folie in ihrem anwendungstechnischen Verhalten ein homogenes Dickenprofil der tiefgezogenen Mulde gewährleistet.
Das Tiefziehen kann bei niedrigen Temperaturen mit einer hohen Taktrate erfolgen.
Die Folie ist mittels Coextrusions-Blasverfahren kostengünstig herstellbar, wobei ein breiter Bereich der Foliendicke (0,020 - 0,250 mm) realisierbar ist.
Auf Grund der gegenüber bisher bekannten Tiefziehfolien besseren Festigkeits- und Elastizitätswerte kann die Foliendicke in spezifischen Einsatzfällen reduziert werden, wodurch sich gleichzeitig Massereduzierungen sowie Kosteneinsparungen für den Anwender ergeben.
Durch das coextrudierte, den späteren Siegeltechnologien angepasste, spezifische Siegelmedium, lassen sich verschiedene Siegelmaterialien anwenden.

Des Weiteren ergibt sich eine einfache Recycelbarkeit, da die Verbundfolie aus einem Ausgangsmaterial, ohne den Einsatz von Klebern, hergestellt wurde.

Als ein Beispiel zur Darstellung, der gegenüber bekannten Mono- und Verbundfolientypen aus Polymeren besseren Werte der spezifischen Eigenschaften der Folie mit einer beim Tiefziehen unteren Schicht aus Polypropylen, einer mittleren Schicht aus Polypropylen in einem Blend mit Polyethylen und einer oberen Schicht aus einem Siegelmedium, sollen die ermittelten Meßwerte einer Folie dienen, deren mittlere Schicht aus einem Polymerblend gebildet ist, das 50 Gew.% Polypropylen mit einer Dichte von 0,9 g/cm³, 22 Gew.% mit Metallionen vernetztem linearen Polyethylen niedriger Dichte von 0,918-0,921 g/cm³ und 28 Gew.% Polyethylen mittlerer Dichte von 0,936-0,939 g/cm³ enthält. Die Folie wurde in bekannter Weise mittels Coextrusions-Blasverfahren in einer Dicke von 0,080 mm hergestellt.
Es wurden die folgenden, unerwartet hohen spezifischen Werte ermittelt:

| | | |
|---|---|---|
| Festigkeit | längs | 36 N/mm² |
| | quer | 29 N/mm² |
| Dehnung | längs | 901 % |
| | quer | 970 % |
| Dart drop | 771 g; | 9,6 g/10⁻⁶ m |

### Weiterreißfestigkeit nach Elmendorf:

| | | |
|---|---|---|
| Festigkeit | längs | 36 N/mm² |
| | quer | 29 N/mm² |
| Dehnung | längs | 901 % |
| | quer | 970 % |
| Dart drop | 771 g; | 9,6 g/10⁻⁶ m |

Das Tiefziehen konnte bei einer Temperatur von 85 °C erfolgen, wobei eine gute Ausziehfähigkeit erzielt wurde.

## Patentansprüche

1. Mittels Coextrusions-Blasverfahren hergestellte, in drei Schichten coextrudierte Folie, zum Einsatz als Tiefziehfolie für Verpackungen, **dadurch gekennzeichnet, dass** die beim Tiefziehen untere Schicht der Folie aus einem Polypropylen (PP) mit hohem Molekulargewicht welches ein heterophasisches Polypropylen Copolymer ist, mit einer Dichte von 0,9 g/cm³, die mittlere Schicht aus einem Blend mit 45-75% des gleichen heterophasischen Polypropylen mit einer Dichte von 0,9 g/cm³ mit thermoplastischem Polyolefin mit einer Dichte von 0,89-0,924 g/cm³, mit 5-30% mit Metallionen vernetztem linearen Polyethylen niedriger Dichte (mLLDPE 0,918-0,921 g/cm³) sowie 5-30% Polyethylen mittlerer Dichte (MDPE; 0,936-0,939 g/cm³) bestehen und die obere Schicht ein Siegelmedium ist.

2. Tiefziehfolie nach Anspruch 1, **dadurch gekennzeichnet, dass** ein Blend für die mittlere Schicht aus 45-75 Gew.% PP, 5-30 Gew.% mLLDPE sowie 5-30 Gew.% MDPE besteht.

3. Tiefziehfolie nach den Ansprüchen 1 und 2, **dadurch gekennzeichnet,**
**dass** das Siegelmedium auf das zu verwendende Siegelmaterial eingestellt ist.

4. Tiefziehfolie nach den Ansprüchen 1 bis 3, **dadurch gekennzeichnet,**
**dass** die Flächenmasse der Folie vom Mischungsverhältnis der einzelnen Komponenten des Blends der mittleren Schicht bestimmt ist.

5. Tiefziehfolie nach den Ansprüchen 1 bis 4, **dadurch gekennzeichnet,**
**dass** dem Polyethylen für die äußere Schicht und dem Polymerblend für die mittlere Schicht Antioxidantien, UV-Stabilisatoren oder UV-Absorber sowie deren Kombination miteinander als Additiv zugesetzt sind.

6. Tiefziehfolie nach den Ansprüchen 1 bis 5, **dadurch gekennzeichnet,**
**dass** die äußere Schicht aus Polypropylen Gleit- und Antiblockmittel aufweist.

## Claims

1. A co-extruded three layer film produced by means of a co-extruding blowing process and intended to be used as a deep-drawing film for packaging, **characterised in that** the lower layer of the film during the deep-drawing process consists of a polypropylene (PP) having a high molecular weight, which is a heterophasic polypropylene copolymer, having a density of 0.9 g/cm³, the middle layer consists of a blend with 45 - 75% of the identical heterophasic polypropylene having a density of 0.9 g/cm³, with thermoplastic polyolefin having a density of 0.89 - 0.924 g/cm³, with 5 - 30% of linear low-density polyethylene cross-linked with metal ions (mLLDPE 0.918 - 0.921 g/cm³) as well as 5 - 30% of medium-density polyethylene (MDPE; 0.936 - 0.939 g/cm³) and the upper layer is a sealing medium.

2. Deep-drawing film as claimed in Claim 1, **characterised in that** a blend for the middle layer consists of 45 - 75 wt.% of PP, 5 - 30 wt.% of mLLDPE as well as 5 - 30 wt.% of MDPE.

3. Deep-drawing film as claimed in Claims 1 and 2, **characterised in that** the sealing medium is adjusted to the sealing material to be used.

4. Deep-drawing film as claimed in Claims 1 to 3, **characterised in that** the surface material of the film is determined by the mixing ratio of the individual components of the blend of the middle layer.

5. Deep-drawing film as claimed in Claims 1 to 4, **characterised in that** anti-oxidants, UV-stabilising agents or UV-absorbers as well as combinations thereof are added as additives to the polyethylene for the outer layer and to the polymer blend for the middle layer.

6. Deep-drawing film as claimed in Claims 1 to 5, **characterised in that** the outer layer of polypropylene comprises lubricating agents and anti-blocking agents.

## Revendications

1. Feuille coextrudée à trois couches, fabriquée par le procédé de soufflage-coextrusion, pour être utilisée comme feuille d'emboutissage profond afin de réaliser des emballages,
**caractérisée en ce que**
la couche qui se trouve en dessous lors de l'emboutissage de la feuille est en polypropylène (PP) à haut poids moléculaire, qui est un copolymère hétérophasique de polypropylène de densité 0,9 g/cm³, la couche médiane est faite d'un mélange constitué à 45-75 % du même polypropylène hétarophasique de densité 0,9 g/cm³ avec une polyoléfine thermoplastique de densité comprise entre 0,89 et 0,924 g/cm³, avec 5 à 30 % de polyéthylènes basse densité linéaires réticulés par des ions métalliques (mLLDPE : 0,918-0,921 g/cm³) ainsi que 5 à 30 % de polyéthylènes de densité moyenne (MDPE : 0,936-0,939 g/cm³), tandis que la couche supérieure est un agent servant à cacheter l'emballage.

2. Feuille d'emboutissage profond selon la revendication 1,
**caractérisée en ce qu'**
un mélange pour réaliser la couche médiane est composé en poids de 45 à 75 % de PP, de 5 à 30 % de mLLDPE et de 5 à 30 % de MDPE.

3. Feuille d'emboutissage profond selon les revendications 1 et 2,
**caractérisée en ce que**
l'agent pour cacheter est défini en fonction du matériau à cacheter utilisé.

4. Feuille d'emboutissage selon l'une quelconque des revendications 1 à 3,
**caractérisée en ce que**
la masse superficielle spécifique de la feuille est définie par le rapport des composants individuels du mélange constituant la couche médiane.

5. Feuille d'emboutissage selon l'une quelconque des revendications 1 à 4,
**caractérisée en ce qu'**
au polyéthylène destiné à la couche externe et au mélange de polymères destiné à la couche médiane, sont ajoutés en tant qu'additifs des antioxydants, des stabilisateurs pour ultraviolets ou des absorbeurs d'ultraviolets, ainsi que des combinaisons de ceux-ci.

6. Feuille d'emboutissage selon l'une quelconque des revendications 1 à 5,
**caractérisée en ce que**
la couche externe présente des agents de glissement et d'antiblocage à base de polypropylène.
